(19) Europäisches Patentamt
European Patent Office
Office européen des brevets

(11) **EP 4 443 344 A1**

(12) **EUROPEAN PATENT APPLICATION**
published in accordance with Art. 153(4) EPC

(43) Date of publication:
**09.10.2024  Bulletin 2024/41**

(51) International Patent Classification (IPC):
***G06N 20/00*** (2019.01)

(21) Application number: **21930596.8**

(22) Date of filing: **03.12.2021**

(52) Cooperative Patent Classification (CPC):
**G06N 20/00; G06N 3/045; G06N 3/08; G06N 3/084**

(86) International application number:
**PCT/JP2021/044400**

(87) International publication number:
**WO 2023/100339 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mitsubishi Electric Corporation
Tokyo 1008310 (JP)**

(72) Inventor: **SAWADA, Tomoya
Chiyoda-ku, Tokyo 100-8310 (JP)**

(74) Representative: **Pfenning, Meinig & Partner mbB
Patent- und Rechtsanwälte
Joachimsthaler Straße 10-12
10719 Berlin (DE)**

(54) **TRAINED MODEL GENERATION SYSTEM, TRAINED MODEL GENERATION METHOD, INFORMATION PROCESSING DEVICE, PROGRAM, TRAINED MODEL, AND ESTIMATION DEVICE**

(57)     A trained model generation system that generates a trained model includes: an estimation unit configured to perform estimation on learning data; a loss gradient calculating unit configured to calculate a gradient of loss for a result of estimation from the estimation unit; and an optimizer unit configured to calculate a plurality of parameters constituting the trained model on the basis of the gradient of loss. The optimizer unit uses an expression including a first factor of which an absolute value becomes greater than 1 to achieve an effect of increasing a learning rate when learning stagnates and in which the effect of increasing the learning rate when the learning stagnates increases as the number of epochs increases as an expression for calculating the learning rate used to calculate the plurality of parameters. Accordingly, it is possible to enable learning to exit from a state in which the learning stagnates.

FIG. 1

10

EP 4 443 344 A1

## Description

[Technical Field]

The present invention relates to a trained model generation system, a trained model generation method, an information processing device, a program, a trained model, and an estimation device.

[Background Art]

In the related art, a gradient descending method is known as a technique (optimizer) of calculating parameters such as weightings of a neural network in machine learning using the neural network or the like. As representative examples of the gradient descending method, a stochastic gradient descent (SGD) method, a momentum SGD method, an adaptive gradient algorithm (Adagrad), a root mean square propagation (RMSprop) method, and an adaptive moment estimation (Adam) method are known (for example, see Patent Literature 1).

In the SGD method, the gradient approaches zero in the vicinity of a saddle point and thus learning may not progress. Therefore, in the momentum SGD method, a calculation expression including an inertia term is used. Accordingly, runaway from the vicinity of a saddle point is possible. In such an optimizer, a learning rate is fixed and thus it takes a lot of time for learning to converge. Therefore, Adagrad, the RMSprop method, the Adam method, and the like for adaptively changing the learning rate by parameters have been proposed.

In Adagrad, a sum of squares of gradients in directions of parameters is stored in a cache. The learning rate for a rare feature can be set to be higher by dividing the learning rate by the square root of the cache. However, there are a problem in which the learning rate approaches zero because the cache increases when epochs progress and a problem in which the learning rate in a certain axis direction decreases in subsequent learning because the cache increases when the gradient in the axis (parameter) direction goes over a high gradient field.

In the RMSprop method, an exponential moving average of gradient information is used. With the exponential moving average, since past information attenuates exponentially, gradient information deeper in the past is removed and latest gradient information is reflected more.

In the Adam method, by estimating primary (average) and secondary (variance) moments of gradient values, it is possible to update more rare information as in the Adagrad method and to remove gradient information deeper in the past as in the RMSprop method.

However, since the exponential moving average with which the learning rate and the amount of update of parameters decrease monotonically with progress of learning is used, there is a problem in that learning may stagnate without rare information being efficiently learned or a correction coefficient may have an extremely large value and diverge at the beginning of learning.

[Citation List]

[Patent Literature]

[Patent Literature 1]
PCT International Publication No. WO 2017/183587

[Summary of Invention]

[Technical Problem]

The present disclosure was made in consideration of the aforementioned circumstances and provides a trained model generation system, a trained model generation method, an information processing device, a program, a trained model, and an estimation device that enable learning to exit from a state in which the learning stagnates.

[Solution to Problem]

In order to solve the aforementioned problems, according to an aspect of the present disclosure, there is provided a trained model generation system that generates a trained model, the trained model generation system including: an estimation unit configured to perform estimation on learning data; a loss gradient calculating unit configured to calculate a gradient of loss for a result of estimation from the estimation unit; and an optimizer unit configured to calculate a plurality of parameters constituting the trained model on the basis of the gradient of loss, wherein the optimizer unit uses an expression including a first factor of which an absolute value becomes greater than 1 to achieve an effect of increasing a learning rate when learning stagnates and in which the effect of increasing the learning rate when the learning stagnates increases as the number of epochs increases as an expression for calculating the learning rate used to calculate the plurality of parameters.

Another aspect of the present disclosure provides the trained model generation system, in which the first factor enables an effect of suppressing the learning rate to be achieved more as the absolute value of the gradient increases and increases the effect of suppressing the learning rate as the number of epochs increases.

Another aspect of the present disclosure provides the trained model generation system, in which the expression for calculating the learning rate includes a second factor which suppresses the learning rate and of which a maximum value is 1 according to a cumulative amount of update of each of the plurality of parameters through learning at the beginning of learning and does not include the second factor subsequently to the beginning of learning.

Another aspect of the present disclosure provides the trained model generation system, in which the second factor has an absolute value which is less than 1 when the cumulative amount of update is less than a threshold value and monotonically decreases when the cumulative amount of update is greater than the threshold value.

According to another aspect of the present disclosure, there is provided a trained model generation method of generating a trained model, the trained model generation method including: a first step of performing estimation on learning data; a second step of calculating a gradient of loss for a result of estimation from the first step; and a third step of calculating a plurality of parameters constituting the trained model on the basis of the gradient of loss, wherein an expression including a first factor of which an absolute value becomes greater than 1 to achieve an effect of increasing a learning rate when learning stagnates and in which the effect of increasing the learning rate when the learning stagnates increases as the number of epochs increases is used as an expression for calculating the learning rate used to calculate the plurality of parameters in the third step.

According to another aspect of the present disclosure, there is provided an information processing device including an optimizer unit configured to calculate a plurality of parameters constituting a trained model on the basis of a gradient of loss calculated from a result of estimation of learning data, wherein the optimizer unit uses an expression including a first factor of which an absolute value becomes greater than 1 to achieve an effect of increasing a learning rate when learning stagnates and in which the effect of increasing the learning rate when the learning stagnates increases as the number of epochs increases as an expression for calculating the learning rate used to calculate the plurality of parameters.

According to another aspect of the present disclosure, there is provided a program causing a computer to serve as an optimizer unit configured to calculate a plurality of parameters constituting a trained model on the basis of a gradient of loss calculated from a result of estimation of learning data, wherein the optimizer unit uses an expression including a first factor of which an absolute value becomes greater than 1 to achieve an effect of increasing a learning rate when learning stagnates and in which the effect of increasing the learning rate when the learning stagnates increases as the number of epochs increases as an expression for calculating the learning rate used to calculate the plurality of parameters.

According to another aspect of the present disclosure, there is provided a trained model that is generated by calculating a plurality of parameters constituting the trained model on the basis of a gradient of loss calculated from a result of estimation of learning data, wherein an expression including a first factor of which an absolute value becomes greater than 1 to achieve an effect of increasing a learning rate when learning stagnates and in which the effect of increasing the learning rate when the learning stagnates increases as the number of epochs increases is used as an expression for calculating the learning rate used to calculate the plurality of parameters.

According to another aspect of the present disclosure, there is provided an estimation device that estimates for input information using a trained model that is generated by calculating a plurality of parameters constituting the trained model on the basis of a gradient of loss calculated from a result of estimation of learning data, wherein an expression including a first factor of which an absolute value becomes greater than 1 to achieve an effect of increasing a learning rate when learning stagnates and in which the effect of increasing the learning rate when the learning stagnates increases as the number of epochs increases is used as an expression for calculating the learning rate when calculating the plurality of parameters.

[Advantageous Effects of Invention]

According to the present disclosure, it is possible to enable learning to exit from a state in which the learning stagnates.

[Brief Description of Drawings]

FIG. 1 is a block diagram schematically illustrating a configuration of a trained model generation and registration system 10 according to an embodiment of the present disclosure.

FIG. 2 is a block diagram schematically illustrating a configuration of a trained model generation device 200 according to the embodiment.

FIG. 3 is a flowchart illustrating operations of the trained model generation device 200 according to the embodiment.

FIG. 4 is a diagram schematically illustrating an example of a neural network of an estimation unit 210 according to the embodiment.

FIG. 5 is a graph in which examples of a learning rate corresponding to a cumulative amount of update according to the embodiment are plotted.

FIG. 6 is a diagram schematically illustrating an example of an optimizer unit 230 according to the embodiment.

FIG. 7 is a block diagram schematically illustrating a configuration of a monitoring camera device 300 according to the embodiment.

[Description of Embodiments]

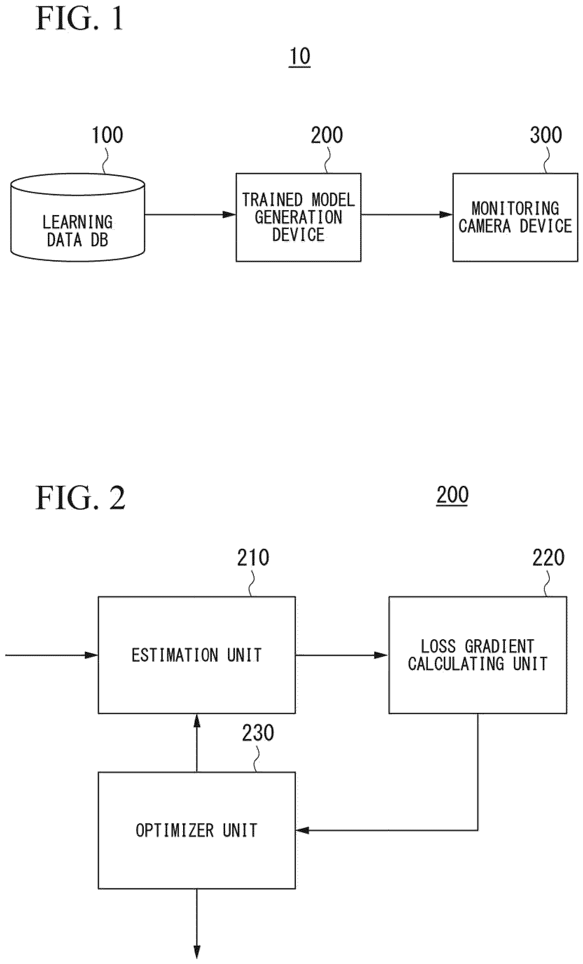

Hereinafter, an embodiment of the present disclosure will be described with reference to the accompanying drawings. FIG. 1 is a block diagram schematically illustrating a configuration of a trained model generation and registration system 10 according to the embodiment. The trained model generation and registration system 10 generates a trained model by performing supervised learning and registers the generated trained model in a monitoring camera device 300. The trained model generation and registration system 10 according to the embodiment uses a gradient method according to the present disclosure of adaptively determining a learning rate to generate a trained model. Details of the gradient method according to the present disclosure will be described later. In this embodiment, an example in which supervised learning is performed using a neural network as an example of machine learning is described, but the method of generating a trained model using the gradient method according to the present disclosure is not limited thereto. Learning other than supervised learning, for example, unsupervised learning or reinforcement learning, may be performed using machine learning other than a neural network, for example, regression analysis, as the machine learning.

The trained model generation and registration system includes a learning data DB 100, a trained model generation device 200, and a monitoring camera device 300. The learning data DB 100 stores images serving as learning data for machine learning. As will be described later, the monitoring camera device 300 includes a model which has been trained according to time periods and positions, and thus the learning data DB 100 stores images serving as learning data according to time periods and positions. The learning data DB 100 may divisionally store daytime images captured in the daytime and nighttime images captured at nighttime as an example of a model according to time periods. The learning data DB 100 may divisionally store entrance images and parking lot images as an example of learning data according to positions.

The trained model generation device 200 generates a trained model by performing machine learning using the images stored in the learning data DB 100. For example, the trained model generation device 200 learns the daytime images to generate a trained model for the daytime and learns the nighttime images to generate a trained model for the nighttime. The trained model generation device 200 learns the entrance images to generate a trained model for an entrance and learns the parking lot images to generate a trained model for a parking lot.

The monitoring camera device 300 stores trained models according to time periods and positions generated by the trained model generation device 200. These trained models may be stored in memory or the like built in the monitoring camera device 300 at the time of production of the monitoring camera device 300. Alternatively, the monitoring camera device 300 may acquire the trained models from a server storing trained models via a network such as the Internet. The monitoring camera device 300 detects an object in a captured image using the stored trained models according to time periods and positions. The monitoring camera device 300 notifies a user of the monitoring camera device 300 of the detected object.

FIG. 2 is a block diagram schematically illustrating the configuration of the trained model generation device 200 according to the embodiment. The trained model generation device 200 includes an estimation unit 210, a loss gradient calculating unit 220, and an optimizer unit 230. The trained model generation device 200 (a trained model generation system) may be constituted by a plurality of devices or may be constituted by one device. For example, each of the estimation unit 210, the loss gradient calculating unit 220, and the optimizer unit 230 may be a single information processing device. The estimation unit 210 includes a neural network and estimates an object included in an image read from the learning data DB 100. The loss gradient calculating unit 220 calculates a gradient of loss for a result of estimation from the estimation unit 210.

Here, a loss is a difference between a result of estimation and an ideal value such as a correct answer. For example, when a result of estimation of a certain image is (0.3, 0.2, 0.1, 0.9) and a correct answer of the image is (0.0, 0.0, 0.0, 1.0), the loss may be an average of squares of differences of each term $(((0.3-0.0)^2+(0.2-0.0)^2+(0.1-0.0)^2+(0.9-1.0)^2)/4=0.0375)$. Alternatively, the loss may be a root mean square error (RMSE), a mean absolute error (MAE), or a root mean square logarithmic error (RMSLE). The loss gradient calculating unit 220 calculates the gradient of loss in a direction of each of a plurality of parameters in a neural network of the estimation unit 210. For example, the gradient of loss in the direction of parameter $x_i$ is approximately calculated as a value $((Loss(x_i+h)-(Loss(x_i-h))/2h$ obtained by dividing a difference between the loss $Loss(xi+h)$ when the value of parameter $x_i$ is $xi+h$ and the loss $Loss(x_i-h)$ when the value of parameter $x_i$ is $x_i-h$ by 2h. The optimizer unit 230 calculates a plurality of parameters in the neural network of the estimation unit 210 on the basis of the gradient of loss calculated by the loss gradient calculating unit 220. A trained model includes the plurality of parameters.

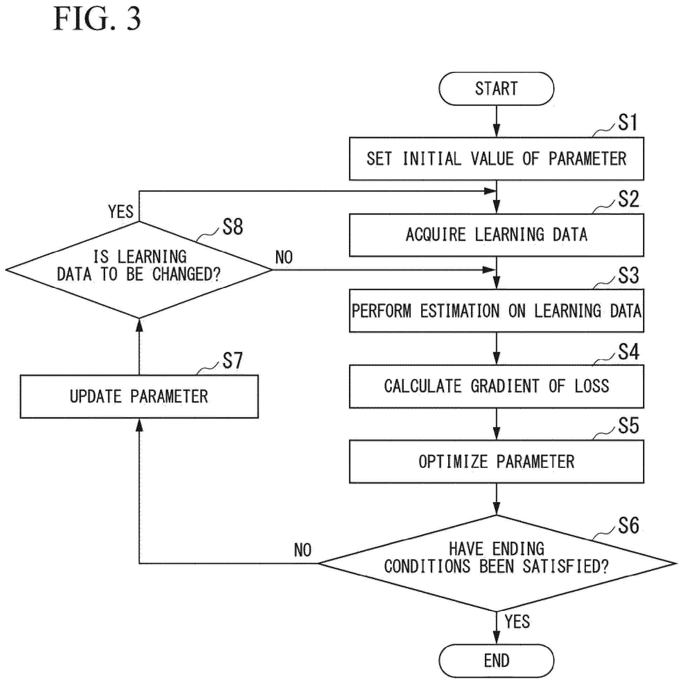

FIG. 3 is a flowchart illustrating operations of the trained model generation device 200 according to the embodiment. A trained model generating process which is performed by the trained model generation device 200 will be described below with reference to FIG. 3. First, the estimation unit 210 sets an initial value of each parameter in the neural network (Step S1). Then, the estimation unit 210 acquires learning data from the learning data DB 100 (Step S2). For example, when a trained model for the daytime is generated, the daytime images are acquired. Then, the estimation unit 210 performs estimation on the selected trained data (Step S3). This estimation is performed using the neural network of the estimation unit 210. This estimation is estimation of an object included in the images of the learning data. Then, the loss gradient calculating unit 220 calculates the gradient of loss from the result of estimation from the estimation unit 210 (Step S4).

Then, the optimizer unit 230 performs optimization of calculating the parameters in the neural network on the basis of the gradient of loss calculated by the loss gradient calculating unit 220 (Step S5). This optimization is performed by solving an optimization problem of determining a combination of the values of the parameters such that the loss is minimized. The gradient method according to the embodiment is used to solve the optimization problem. Details of the gradient method according to the embodiment will be described later.

Then, the optimizer unit 230 determines whether ending conditions for ending generation of a trained model have been satisfied (Step S6). Any conditions such as the number of times and convergence of a loss may be used as the ending conditions. When it is determined that the ending conditions have been satisfied (Step S6: YES), the optimizer unit 230 ends the trained model generating process and sets a model including the parameters at that time as a trained model.

When it is determined in Step S6 that the ending conditions have not been satisfied (Step S6: NO), the optimizer unit 230 updates the parameters in the neural network of the estimation unit 210 with the parameters optimized in Step S5 (Step S7). Then, the estimation unit 210 determines whether learning data is to be changed (Step S8). For example, when the processes of Steps S3 to S7 are performed on the same learning data a predetermined number of times or more, the estimation unit 210 may determine that the learning data is to be changed and may otherwise determine that the learning data is not to be changed. Alternatively, when the loss does not decrease even if the processes of Steps S3 to S7 are repeated, the estimation unit 210 may determine that the learning data is to be changed, and may otherwise determine that the learning data is not to be changed.

The routine proceeds to Step S2 when it is determined in Step S8 that the learning data is to be changed (Step S8: YES), and the routine proceeds to Step S3 when it is determined that the learning data is not to be changed (Step S8: NO).

In this embodiment, determination of the ending conditions in Step S6 is performed after Step S5, but the present disclosure is not limited thereto. For example, Step S6 may be performed after Step S2 or may be performed after Step S3.

The trained model generation device 200 generates a trained model by repeatedly performing estimation on learning data, calculation of the gradient of loss, and optimization of the parameters. The number of repetitions is also referred to as the number of epochs. The number of pieces of learning data acquired in Step S2 may be one or more.

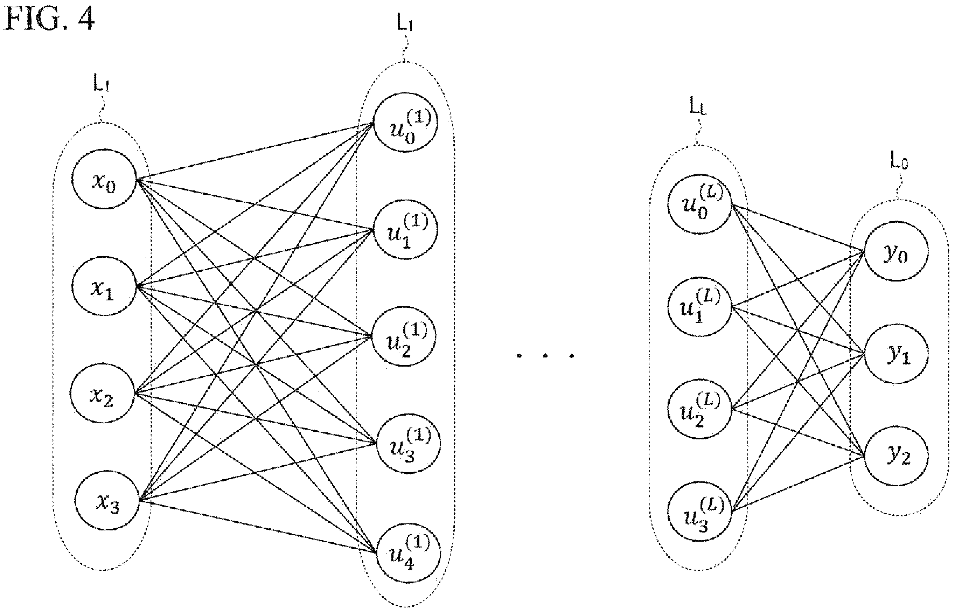

FIG. 4 is a diagram schematically illustrating an example of the neural network of the estimation unit 210 according to the embodiment. In the example illustrated in FIG. 4, the neural network includes an input layer Li, L intermediate layers $L_1$, $L_2$, ..., and $L_L$, and an output layer Lo. The input layer $L_I$ includes four nodes $x_0$, $x_1$, $x_2$, and $x_3$. Pixel values of an image serving as learning data may be input to the nodes $x_0$, $x_1$, $x_2$, and $x_3$ of the input layer Li. Values obtained by performing pre-processes such as outline extraction and luminance adjustment on the image serving as learning data may be input to the nodes $x_0$, $x_1$, $x_2$, and $x_3$ of the input layer Li.

Out of the L intermediate layers $L_1$, $L_2$, ..., and $L_L$, the m-th intermediate layer $L_m$ includes n nodes $u^{(m)}_0$, $u^{(m)}_1$, $\cdots$, and $u^{(m)}_{n-1}$. In the example illustrated in FIG. 4, the first intermediate layer $L_1$ includes five nodes $u^{(1)}_0$, $u^{(1)}_1$, $u^{(1)}_2$, $u^{(1)}_3$, and $u^{(1)}_4$, and the L-th intermediate layer $L_L$ includes four nodes $u^{(L)}_0$, $u^{(L)}_1$, $u^{(L)}_2$, and $u^{(L)}_3$. The output layer Lo includes three nodes $y_0$, $y_1$, and $y_2$. The values of the nodes $y_0$, $y_1$, and $y_2$ of the output layer Lo are values indicating the results of estimation from the estimation unit 210 and represents, for example, a probability that a corresponding object is included in the corresponding node.

A value input to a node of a certain layer is determined on the basis of a value input to the node in the previous layer as expressed by Expression (1). In Expression (1), $w^{(l)}_{i,j}$ is a weighting, and $b^{(l)}_i$ is a bias. The values of the weighting $w^{(l)}_{i,j}$ and the bias $b^{(l)}_i$ are parameters in the neural network and are determined by the optimizer unit 230. f() is an activation function. The activation function in the embodiment may be any function that is used as an activation function of a neural network, such as a sigmoid function or a normalization linear function.

[Math. 1]

$$u_i^{(l+1)} = f(\sum_j w_{i,j}^{(l)} u_j^{(l)} + b_i^{(l)}) \quad \cdots \quad (1)$$

where $\quad x_i = u_i^{(0)}, \quad y_i = u_i^{(L+1)}$

The numbers of nodes included in the layers in FIG. 4 are set to 4, 5, 4, and 3 for the purpose of simplification of description, but the present disclosure is not limited thereto.

The gradient method used by the optimizer unit 230 will be described below with reference to the following expressions. The optimizer unit 230 optimizes the parameters in the neural network of the estimation unit 210 using Expression (2) at the time of performing Step S5 in FIG. 3.

[Math. 2]

$$m = \beta 1 * m + (1 - \beta 1) * dx , \quad mt = m / (1 - \beta 1 ^\wedge t)$$
$$v = \beta 2 * v + (1 - \beta 2) * (dx^\wedge 2) , \quad vt = v / (1 - \beta 2 ^\wedge t)$$
$$\text{if } 1/\text{cache} := 0$$
$$at = (\beta 3 * at + (1 - \beta 3) * a0 ) * ((1/m)^\wedge t)$$
$$\text{else}$$
$$at = (\beta 3 * at + (1 - \beta 3) * a0 )$$
$$* ((1/m)^\wedge t * (1/\text{cache})^\wedge \log(|\text{cache}|))$$
$$x += - at * mt / (\text{sqrt}(vt) + eps)$$
$$\text{cache} += x$$

$$\cdots \quad (2)$$

In Expression (2), x is a parameter to be optimized, that is, one of the weighting $w^{(l)}_{i,j}$ and the bias $b^{(l)}_i$ which are the parameters in the neural network. That is, the optimizer unit 230 performs the process of Expression (2) on each of the weighting $w^{(l)}_{i,j}$ and the bias $b^{(l)}_i$. $\beta_1$, $\beta_2$, and $\beta_3$ are predetermined numbers which are greater than 0 and less than 1. These values may be set by an operator of the trained model generation device 200.

dx is the gradient of loss in the x direction which is calculated by the loss gradient calculating unit 220. That is, when x is a weighting $w^{(l)}_{i,j}$, dx is the gradient in the direction of the weighting $w^{(l)}_{i,j}$. When x is a bias $b^{(l)}_i$, dx is the gradient in the direction of the bias $b^{(l)}_i$. Here, t is the number of epochs. at is the learning rate. a0 is an initial value of the learning rate. The value of a0 may be set by an operator of the trained model generation device 200. eps is a very small predetermined constant for preventing the denominator from being zero.

The operator "^" denotes an exponent. log is a common logarithm. sqrt() is a positive square root. := denotes that the value of the left side is close to the value of the right side. That is, an absolute value of a difference between the value of the left side and the value of the right side is equal to or less than a predetermined number. += denotes that the value of the right side is added to the value of a variable of the left side and the resultant value is stored in the variable of the left side. Accordingly, cache has a cumulative value of the value of x in the epochs. Here, cache is referred to as a cumulative amount of update.

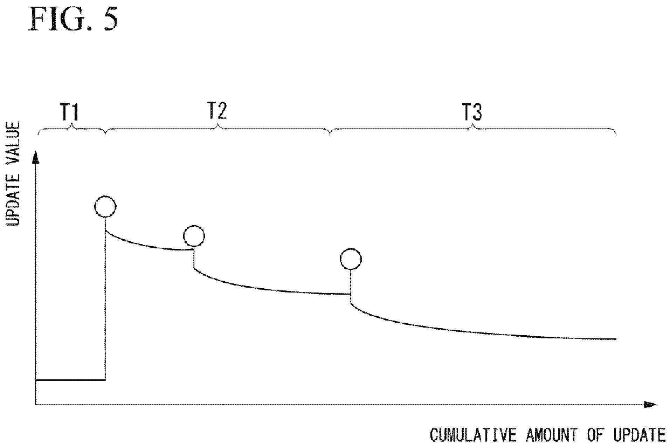

FIG. 5 is a graph in which examples of an update value corresponding to the cumulative amount of update in the embodiment are plotted. In FIG. 5, the horizontal axis represents the cumulative amount of update (cache in Expression (2)), and the vertical axis represents an update value of parameter X (-at*mt/(sqrt(vt)+eps) in Expression (2)). In the example illustrated in FIG. 5, the update value protrudes at three positions marked by a circle. This is an effect based on a factor (1/m)^t (hereinafter referred to as a first factor) included in a calculation expression of the learning rate at in Expression (2). When learning stagnates at an extreme value of loss, the absolute value of the gradient dx is maintained at a very small value. When such a state is continued, an absolute value of m which is an exponential moving average of the gradient dx also decreases (becomes less than 1). Then, the absolute value of the first factor which is a t-th power of a reciprocal of m increases. Accordingly, the learning rate increases, and thus it is possible to prevent the update value of parameter X from decreasing when the trend of the learning data differs from that up to that time and the value of the gradient dx is suddenly away from 0. When the value of parameter X is appropriately updated, exiting from the state in which learning stagnates can be expected. As the number of epochs increases, the value of t increases. When learning stagnates and the absolute value of m is less than 1, the absolute value of the first factor increases due to the effect of the t-th power as the number of epochs increases with the same value of m. Accordingly, the first factor provides an increasing effect of increasing the learning rate when learning stagnates as the number of epochs increases.

In this way, the absolute value of the first factor becomes greater than 1 when learning stagnates, and an effect of increasing the learning rate is obtained. Since the reciprocal of m is raised to the t-th power, the first factor provides an increasing effect of increasing the learning rate when learning stagnates as the number of epochs increases. Accordingly, runway from the state in which learning stagnates is possible.

However, when the gradient dx continuously has a large value, the absolute value of m which is an exponential moving average of the gradient dx increases and the reciprocal 1/m decreases. Accordingly, the absolute value of the first factor decreases as the absolute value of the gradient dx increases, and an effect of suppressing the learning rate is obtained. When the absolute value of m is greater than 1, the effect of suppressing the learning rate increases as the number of epochs increases due to the first factor. Accordingly, when the number of epochs increases, that is, learning is progressing, and the gradient dx continuously has a large value, the learning rate is suppressed. As a result, it is possible to avoid great separation from the result of learning up to now, that is, destruction of learning information up to now.

In the example illustrated in FIG. 5, the learning rate in a section T1 in which the cumulative amount of update is small is less than the learning rates in a section T2 and a section T3. This is an effect based on a factor (1/cache)^log(| cache|) (hereinafter referred to as a second factor) included in the calculation expression of the update value of the learning rate at when if 1/cache:=0 in Expression (2) has not been satisfied, that is, in the beginning sections T1 and T2 of learning. For example, the value of the second factor is a small value such as 0.0001 when cache is 0.01. The value of the second factor is 1 which is a maximum value when cache is 1, and then decreases monotonically.

At the beginning of learning, the gradient may be large, for example, when an initial value of a parameter is greatly away from an optimal value. Due to the large gradient, the amount of update of the parameter may increase and learning may diverge. However, when the learning rate is set to a smaller value in the section T1 in which the cumulative amount of update is small, it is possible to decrease the learning rate at the beginning of learning due to the small cumulative amount of update at the beginning of learning. Since the gradient is large when the learning rate is low, the amount of update of the parameter increases and thus it is possible to prevent divergence of learning.

However, since learning does not progress with a low learning rate, the value of the second factor is equal to or less than 1 until the cumulative amount of update reaches 1 which is a threshold value but is 1 when the cumulative amount of update is 1. In the section T2 in which the cumulative amount of update is greater than 1, the value of the second factor decreases monotonically and thus the update value also decreases except the protruding portions marked by a circle. Accordingly, it is possible to prevent divergence of learning and continuation of fluctuation because learning runs away from that up to now.

When the cumulative amount of update increases and if 1/cache:=0 is satisfied, the calculation expression of the learning rate at includes the first factor but does not include the second factor. Accordingly, it is possible to prevent protrusion of the update value due to the first factor from being suppressed by the second factor. On the other hand, when learning is progressing, the learning rate is suppressed by the first factor even if the gradient dx continuously has a large value. Accordingly, it is possible to avoid great separation from the learning result up to now, that is, destruction of learning information up to now.

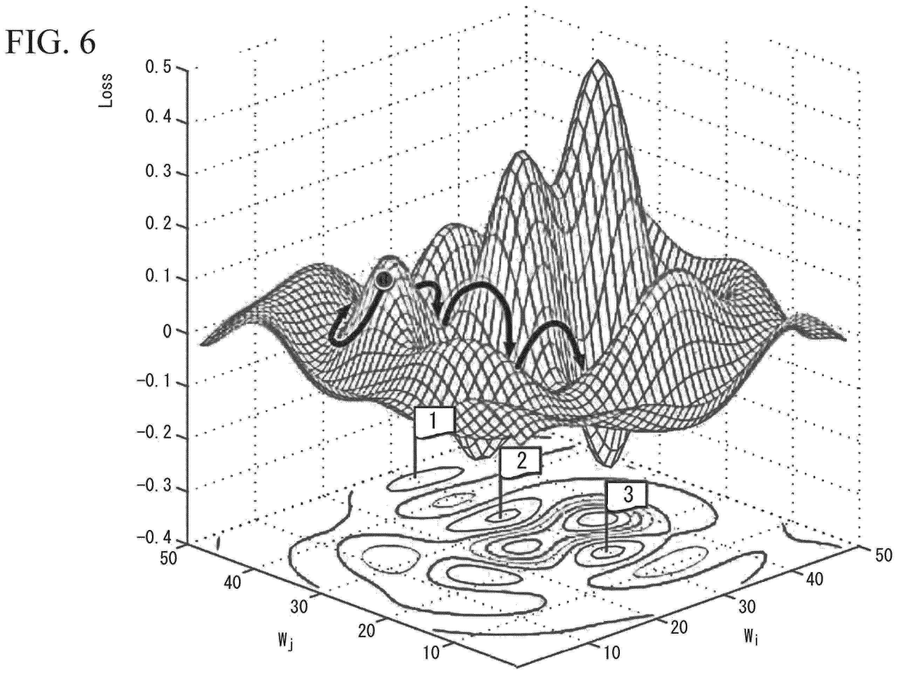

FIG. 6 is a diagram schematically illustrating an example of the optimizer unit 230 according to the embodiment. In FIG. 6, only two parameters $w_i$ and $w_j$ are exemplified for the purpose of simplification of description, but the number of parameters is not limited thereto. FIG. 6 is a graph in which losses for a combination of values of the parameters $w_i$ and $w_j$ are plotted. The horizontal plane is defined by the axes of the parameters $w_i$ and $w_j$. The vertical direction is defined as the axis of loss (Loss).

The initial values of the parameters $w_i$ and $w_j$ are indicated by a circle in FIG. 6, that is, a position with a large gradient, but the cumulative amount of update is small and the learning rate is suppressed at the beginning of learning as described above with reference to FIG. 5. Accordingly, the values of the parameters $w_i$ and $w_j$ do not diverge and changes to smoothly decrease the gradient. Thereafter, when the values of the parameters $w_i$ and $w_j$ reach extreme values indicated by Flag No. 1, learning stagnates. However, the values of the parameters $w_i$ and $w_j$ are updated to bound because of the effect of the first factor. Thereafter, the same is true when the values of the parameters $w_i$ and $w_j$ reach extreme values indicated by Flag No. 2. Then, the values of the parameters $w_i$ and $w_j$ can reach extreme values indicated by Flag No. 3 in which the loss is minimized in FIG. 6.

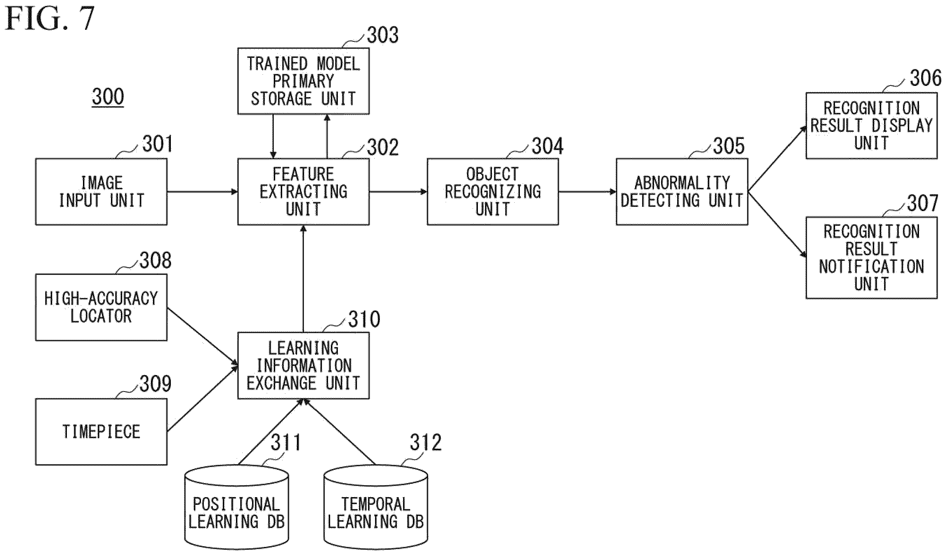

FIG. 7 is a block diagram schematically illustrating the configuration of the monitoring camera device 300 according to the embodiment. The monitoring camera device 300 includes an image input unit 301, a feature extracting unit 302, a trained model primary storage unit 303, an object recognizing unit 304, an abnormality detecting unit 305, a recognition result display unit 306, a recognition result notification unit 307, a high-accuracy locator 308, a timepiece 309, a learning information exchange unit 310, a positional learning DB 311, and a temporal learning DB 312. The monitoring camera device 300 may be constituted by a single device or may be constituted by a plurality of devices. For example, the feature extracting unit 302 and the trained model primary storage unit 303 may constitute an estimation device.

The image input unit 301 includes an imaging device and an optical system that forms an image of a subject on an imaging plane of the imaging device. The image input unit 301 converts an image of a subject formed on the imaging plane to an electrical signal. The feature extracting unit 302 estimates an object included in the image of a subject converted to an electrical signal using the neural network. The trained model primary storage unit 303 stores a trained model which is a parameter in a neural network of the feature extracting unit 302.

The object recognizing unit 304 recognizes an object included in the image from the result of estimation from the feature extracting unit 302. The abnormality detecting unit 305 determines whether the object recognized by the object recognizing unit 304 is an abnormal object for which an alarm should be issued. The recognition result display unit 306 displays a name or the like of the object recognized by the object recognizing unit 304 on a screen to notify an operator. When the abnormality detecting unit 305 determines that the object is abnormal to issue an alarm, the recognition result notification unit 307 issues an alarm in voice to notify the operator. At this time, the recognition result notification unit 307 may change voice which is issued according to details of the abnormality.

The high-accuracy locator 308 detects a position at which the monitoring camera device 300 is installed using a global positioning system (GPS) or the like. The timepiece 309 informs of a current time. The learning information exchange unit 310 acquires a trained model corresponding to the position detected by the high-accuracy locator 308 or the current time informed of by the timepiece 309 from the positional learning DB 311 or the temporal learning DB 312. The learning information exchange unit 310 stores the acquired trained model in the trained model primary storage unit 303 via the feature extracting unit 302. The positional learning DB 311 stores the trained model generated by the trained model generation device 200 according to positions. The temporal learning DB 312 stores the trained model generated by the trained model generation device 200 according to time periods.

The positional learning DB 311 and the temporal learning DB 312 may be used by a plurality of monitoring camera devices 300. For example, a plurality of monitoring camera devices 300 may access the positional learning DB 311 and the temporal learning DB 312 via a network.

The monitoring camera device 300 may include the learning data DB 100 and the trained model generation device 200. In this case, learning data stored in the learning data DB 100 may be data of an image output from the image input unit 301.

The optimizer unit 230 may include extreme value regression using a Hessian matrix. That is, when parameters are calculated using a calculation method other than Expression (2) such as when parameters are calculated using a high-order derivative such as a second derivative of a loss in addition to the gradient of loss dx, the optimizer unit 230 may calculate the learning rate at in the same way as expressed by Expression (2). When the learning rate at is calculated, the optimizer unit 230 may perform multiplication of another factor or addition of another term in addition to the first factor and the second factor.

The trained model generation device 200 or the monitoring camera device 300 may be realized by recording a program for realizing the functions of the trained model generation device 200 or the monitoring camera device 300 in FIG. 1 on a computer-readable recording medium and causing a computer system to read and execute the program recorded on the recording medium. The "computer system" mentioned herein may include an operating system (OS) or hardware such as peripherals.

The "computer-readable recording medium" may be a portable medium such as a flexible disk, a magneto-optical disc, a ROM, a CD-ROM, or a DVD or a storage device such as a hard disk or an SSD incorporated in a computer system. The "computer-readable recording medium" may include a medium that dynamically holds a program for a short time like a communication line in a case in which a program is transmitted via a network such as the Internet or a communication circuit line such as a telephone line or a medium that holds a program for a predetermined time such as volatile memory in a computer system serving as a server or a client in that case. The program may be a program for realizing some of the aforementioned functions or may be a program which can realize the aforementioned functions in combination with another program stored in advance in the computer system.

The functional blocks of the trained model generation device 200 illustrated in FIG. 1 or the monitoring camera device 300 illustrated in FIG. 7 may be individually made into chips, or some or all thereof may be made into a chip. An integrated circuit is not limited to LSI but may be realized as a dedicated circuit or a general-purpose processor. The integrated circuit may be one of hybrid and monolithic. Some functions may be realized in hardware and some functions may be realized in software.

When integration technology that can be used instead of LSI would have been developed with advancement in semiconductor technology, an integrated circuit based on the integration technology may be used.

While an embodiment of the present invention has been described above in detail with reference to the drawings, the specific configuration thereof is not limited to the embodiment and includes various modifications in design without departing from the gist of the present invention.

[Reference Signs List]

| 10 | Trained model generation and registration system |
| 100 | Learning data DB |
| 200 | Trained model generation system |
| 210 | Estimation unit |
| 220 | Loss gradient calculating unit |
| 230 | Optimizer unit |
| 300 | Monitoring camera device |
| 301 | Image input unit |
| 302 | Feature extracting unit |
| 303 | Trained model primary storage unit |
| 304 | Object recognizing unit |
| 305 | Abnormality detecting unit |
| 306 | Recognition result display unit |
| 307 | Recognition result notification unit |
| 308 | High-accuracy locator |
| 309 | Timepiece |
| 310 | Learning information exchange unit |
| 311 | Positional learning DB |
| 312 | Temporal learning DB |

**Claims**

1. A trained model generation system that generates a trained model, the trained model generation system comprising:

   an estimation unit configured to perform estimation on learning data;
   a loss gradient calculating unit configured to calculate a gradient of loss for a result of estimation from the estimation unit; and
   an optimizer unit configured to calculate a plurality of parameters constituting the trained model on the basis of the gradient of loss,
   wherein the optimizer unit uses an expression including a first factor of which an absolute value becomes greater than 1 to achieve an effect of increasing a learning rate when learning stagnates and in which the effect of increasing the learning rate when the learning stagnates increases as the number of epochs increases as an expression for calculating the learning rate used to calculate the plurality of parameters.

2. The trained model generation system according to claim 1, wherein the first factor enables an effect of suppressing the learning rate to be achieved more as the absolute value of the gradient increases and increases the effect of suppressing the learning rate as the number of epochs increases.

3. The trained model generation system according to claim 1 or 2, wherein the expression for calculating the learning rate includes a second factor which suppresses the learning rate and of which a maximum value is 1 according to a cumulative amount of update of each of the plurality of parameters through learning at the beginning of learning and does not include the second factor subsequently to the beginning of learning.

4. The trained model generation system according to claim 3, wherein the second factor has an absolute value which is less than 1 when the cumulative amount of update is less than a threshold value and monotonically decreases when the cumulative amount of update is greater than the threshold value.

5. A trained model generation method of generating a trained model, the trained model generation method comprising:

   a first step of performing estimation on learning data;
   a second step of calculating a gradient of loss for a result of estimation from the first step; and
   a third step of calculating a plurality of parameters constituting the trained model on the basis of the gradient of loss,
   wherein an expression including a first factor of which an absolute value becomes greater than 1 to achieve an effect of increasing a learning rate when learning stagnates and in which the effect of increasing the learning rate when the learning stagnates increases as the number of epochs increases is used as an expression for calculating the learning rate used to calculate the plurality of parameters in the third step.

6. An information processing device comprising:

an optimizer unit configured to calculate a plurality of parameters constituting a trained model on the basis of a gradient of loss calculated from a result of estimation of learning data,
wherein the optimizer unit uses an expression including a first factor of which an absolute value becomes greater than 1 to achieve an effect of increasing a learning rate when learning stagnates and in which the effect of increasing the learning rate when the learning stagnates increases as the number of epochs increases as an expression for calculating the learning rate used to calculate the plurality of parameters.

7. A program causing a computer to serve as:

an optimizer unit configured to calculate a plurality of parameters constituting a trained model on the basis of a gradient of loss calculated from a result of estimation of learning data,
wherein the optimizer unit uses an expression including a first factor of which an absolute value becomes greater than 1 to achieve an effect of increasing a learning rate when learning stagnates and in which the effect of increasing the learning rate when the learning stagnates increases as the number of epochs increases as an expression for calculating the learning rate used to calculate the plurality of parameters.

8. A trained model that is generated by calculating a plurality of parameters constituting the trained model on the basis of a gradient of loss calculated from a result of estimation of learning data, wherein an expression including a first factor of which an absolute value becomes greater than 1 to achieve an effect of increasing a learning rate when learning stagnates and in which the effect of increasing the learning rate when the learning stagnates increases as the number of epochs increases is used as an expression for calculating the learning rate used to calculate the plurality of parameters.

9. An estimation device that estimates for input information using a trained model that is generated by calculating a plurality of parameters constituting the trained model on the basis of a gradient of loss calculated from a result of estimation of learning data, wherein an expression including a first factor of which an absolute value becomes greater than 1 to achieve an effect of increasing a learning rate when learning stagnates and in which the effect of increasing the learning rate when the learning stagnates increases as the number of epochs increases is used as an expression for calculating the learning rate when calculating the plurality of parameters.

# FIG. 1

10

100

LEARNING DATA DB

200

TRAINED MODEL GENERATION DEVICE

300

MONITORING CAMERA DEVICE

# FIG. 2

200

210

ESTIMATION UNIT

220

LOSS GRADIENT CALCULATING UNIT

230

OPTIMIZER UNIT

# FIG. 3

START

↓

SET INITIAL VALUE OF PARAMETER — S1

↓

ACQUIRE LEARNING DATA — S2

↓

PERFORM ESTIMATION ON LEARNING DATA — S3

↓

CALCULATE GRADIENT OF LOSS — S4

↓

OPTIMIZE PARAMETER — S5

↓

HAVE ENDING CONDITIONS BEEN SATISFIED? — S6

NO → UPDATE PARAMETER — S7

YES → END

IS LEARNING DATA TO BE CHANGED? — S8

YES / NO

FIG. 4

FIG. 5

FIG. 6

# FIG. 7

# INTERNATIONAL SEARCH REPORT

| | International application No. |
|---|---|
| | **PCT/JP2021/044400** |

## A. CLASSIFICATION OF SUBJECT MATTER

*G06N 20/00*(2019.01)i
FI: G06N20/00

According to International Patent Classification (IPC) or to both national classification and IPC

## B. FIELDS SEARCHED

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 7-56880 A (CHUBU ELECTRIC CO., LTD.) 03 March 1995 (1995-03-03) paragraphs [0001]-[0011] | 1-9 |
| A | JP 2001-56802 A (OKI ELECTRIC INDUSTRY CO., LTD.) 27 February 2001 (2001-02-27) paragraphs [0001]-[0056] | 1-9 |
| A | US 6269351 B1 (DRYKEN TECHNOLOGIES, INC.) 31 July 2001 (2001-07-31) SUMMARY OF THE INVENTION | 1-9 |
| A | US 2020/0401893 A1 (GOOGLE LLC) 24 December 2020 (2020-12-24) summary | 1-9 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 February 2022** | **22 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/044400**

| Patent document cited in search report | | | Publication date (day/month/year) | Patent family member(s) | | | Publication date (day/month/year) |
|---|---|---|---|---|---|---|---|
| JP | 7-56880 | A | 03 March 1995 | (Family: none) | | | |
| JP | 2001-56802 | A | 27 February 2001 | (Family: none) | | | |
| US | 6269351 | B1 | 31 July 2001 | WO | 2000/008568 | A1 | |
| | | | | EP | 1082698 | A1 | |
| | | | | AU | 5254799 | A | |
| US | 2020/0401893 | A1 | 24 December 2020 | DE | 202019106332 | U1 | |

Form PCT/ISA/210 (patent family annex) (January 2015)

**REFERENCES CITED IN THE DESCRIPTION**

**Patent documents cited in the description**

- WO 2017183587 A